# EUROPÄISCHE PATENTSCHRIFT

(11) **EP 3 608 082 B1**
(45) Veröffentlichungstag und Bekanntmachung des Hinweises auf die Patenterteilung: **28.07.2021**
(21) Anmeldenummer: 19189995.4
(22) Anmeldetag: 05.08.2019
(51) Int. Cl.: B29C 64/00, B29C 64/118, B29C 64/182, B29C 64/30, B29C 64/386, B33Y 10/00, B33Y 30/00, B33Y 40/00, B33Y 50/00, B29C 64/188, B23P 23/04

(54) **VERFAHREN ZUM BEARBEITEN VON WERKSTÜCKEN**
METHOD FOR FINISHING WORKPIECES
PROCÉDÉ D'USINAGE DE PIÈCES

(30) Priorität: 08.08.2018 DE 102018119281
(43) Veröffentlichungstag der Anmeldung: 12.02.2020
(73) Patentinhaber: Homag Bohrsysteme GmbH, 33442 Herzebrock-Clarholz (DE)
(72) Erfinder: Bettermann, Thomas, 33699 Bielefeld (DE); Kazakov, Aleksandr, 48157 Münster (DE)
(74) Vertreter: Hoffmann Eitle

(56) Entgegenhaltungen:
- WO-A1-2017/110375
- WO-A1-2018/048898
- DE-A1-102014 206 697
- DE-A1-102016 209 612

## Beschreibung

### Technisches Gebiet

Die Erfindung betrifft ein Verfahren zum Bearbeiten von Werkstücken, bei dem unterschiedliche Bearbeitungsarten kombiniert werden. Insbesondere sollen ein subtraktives und ein additives Verfahren zum Einsatz kommen. Ein solches Verfahren kann beispielsweise im Bereich Möbel- und Bauelementeindustrie zur Anwendung kommen.

### Stand der Technik

Bei der Bearbeitung von Werkstücken mit einem subtraktiven Verfahren, also beispielsweise Fräsen oder Bohren, kann eine sogenannte Pendelbearbeitung zum Einsatz kommen. Bei einer Pendelbearbeitung wird ein Werkstück an einer Seite der Bearbeitungsmaschine für eine nachfolgende Bearbeitung platziert, während in einem anderen Abschnitt der Bearbeitungsmaschine bereits eine Bearbeitung an einem anderen Werkstück durchgeführt wird. Das Beschicken/Entnehmen der Werkstücke sowie die Bearbeitung erfolgen hierbei abwechselnd, so dass Nebenzeiten reduziert werden können.

Werden in einem additiven Verfahren mehrere Werkstücke mit einer Bearbeitungsmaschine hergestellt, so führt diese Art der Bearbeitung bedingt durch den schichtweisen Aufbau der Werkstücke zu Nebenzeiten, die durch Bewegungen der Bearbeitungseinrichtung, insbesondere Druckdüse, ohne Materialaustrag hervorgerufen werden (sogenannte Leerfahrten). Dies erfolgt durch die Fahrtstrecken zwischen den zu erstellenden Werkstücken.

Nebenzeiten sind selbstverständlich auch bei sogenannten hybriden Bearbeitungsmaschinen ein Faktor, die zwei unterschiedliche Bearbeitungsarten kombinieren, also rein beispielhaft sowohl eine subtraktive Bearbeitung als auch eine additive Bearbeitung kombinieren.

Ferner ist aus der DE 10 2016 209 612 A1 eine Vorrichtung sowie ein Verfahren bekannt, mit der/dem Bauteile gefertigt werden können, wobei im Rahmen des Verfahrens Werkstücke bereitgestellt werden und ein dreidimensionaler Körper mittels eines additiven Verfahrens erstellt wird, wobei der dreidimensionale Körper am Werkstück ausgebildet wird oder mit diesem verbunden wird.

Ferner ist die Anmeldung DE 10 2014 206 697 A1 bekannt, die eine Vorrichtung sowie Verfahren zum Erstellen von Volumenkörpern betrifft. Die Vorrichtung umfasst ein Bearbeitungswerkzeug zur bevorzugt abtragenden Bearbeitung von Werkstücken, eine Zuführeinrichtung zur Zuführung eines additiven Werkstoffs, beispielsweise teilweise Holzmaterials, wie Holzschaum, Holzmehl, Sägespäne oder Ähnlichem, einer metallischen oder mineralischen Paste, oder Kunststoff, sowie eine Auftragseinheit zum Ausbilden von Volumenkörpern aus dem mittels der Zuführeinrichtung zugeführten Werkstoff.

### Gegenstand der Erfindung

Die Erfindung zielt darauf ab, ein Verfahren bereitzustellen, mit dem bei einer Bearbeitung von Werkstücken mit unterschiedlichen Bearbeitungsarten die Nebenzeiten weiter reduziert werden können.

Anspruch 1 stellt ein entsprechendes Verfahren bereit. Weitere bevorzugte Ausführungsformen sind in den abhängigen Ansprüchen aufgeführt.

Erfindungsgemäß wird ein Verfahren zum Bearbeiten von Werkstücken bereitgestellt, welches Verfahren die Schritte umfasst: Nacheinander Ausbilden von Werkstücken mittels eines additiven Verfahrens, Bearbeiten zumindest eines der Werkstücke mittels eines subtraktiven Verfahrens. In einer bevorzugten Ausführungsform werden die Schritte in der genannten Reihenfolge ausgeführt.

Durch das erfindungsgemäße Verfahren können Werkstücke mit Hilfe verschiedener Bearbeitungsarten zeitoptimiert und parallel auf einer Maschine hergestellt werden. Dabei werden die Nebenzeiten, die beispielsweise durch das Warten auf die Aushärtung sowie Leerfahrten deutlich reduziert. Somit können beispielsweise Teile eines Bausatzes im Set hergestellt werden.

In diesem Zusammenhang ist es möglich, die individuellen und werkstückspezifischen Fertigungsanforderungen zu berücksichtigen. Somit können Gruppen von individuellen Werkstücken zeitoptimiert gefertigt werden.

Erfindungsgemäß ist es vorgesehen, dass basierend auf werkstückspezifischen Informationen die Anzahl der nacheinander ausgebildeten Werkstücke vor dem Bearbeiten des zumindest einen Werkstücks mittels des subtraktiven Verfahrens bestimmt wird.

Die werkstückspezifische Information kann im Zuge des Verfahrens, beispielsweise durch Messen einer oder mehrerer Temperaturwerte, wie Oberflächentemperaturen, des Werkstücks bestimmt werden. Ferner ist es möglich, die werkstückspezifische Information vorab zu ermitteln, nämlich durch eine Simulation des Aushärteverhaltens des Werkstücks. Die genannten Maßnahmen können auch in Kombination zum Einsatz kommen.

Ferner ist es vorgesehen, dass die Information mittels eines Temperatursensors an einem oder mehreren der mittels des additiven Verfahrens ausgebildeten Werkstücke ermittelt wird. Auf diese Weise lässt sich die werkstückspezifische Information äußerst exakt ermitteln.

Alternativ ist es vorgesehen, die werkstückspezifische Information vor dem Ausbilden der Werkstücke durch Bestimmung der jeweiligen Aushärtezeit der Werkstücke mittels Simulation bestimmt werden, um das Verfahren noch gezielter auszurichten.

Im Rahmen des Verfahrens kann der Wechsel zwischen einem additiven Verfahren und einem subtraktiven Verfahren mehrfach stattfinden.

Ferner ist es möglich, das Einlegen oder Anbringen eines Elements an eines oder mehrerer der mittels des additiven Verfahrens erstellten Werkstücke als einen weiteren Schritt vorzusehen. Beispielsweise könnte das entsprechende Werkstück auf diese Weise verstärkt oder mit einer zusätzlichen Funktion ausgestattet werden.

Gemäß einer weiteren Ausführungsform kann es vorgesehen sein, in einem weiteren Schritt des Verfahrens an einem mittels des additiven Verfahrens hergestellten und zumindest teilweise ausgehärteten Werkstücks einen weiteren Abschnitt mittels eines additiven Verfahrens auszubilden. Dabei kann in einer Ausprägung ein Werkstück mittels eines additiven Verfahrens erstellt, dieses Werkstück nachfolgend subtraktiv, beispielsweise spanend, bearbeitet und in einem weiteren Schritt ein weiterer Abschnitt additiv ausgebildet werden.

In einer bevorzugten Ausführungsform ist es vorgesehen, dass das subtraktive Verfahren ein spanendes Verfahren, beispielsweise mittels eines Fräsers oder Bohrers, umfasst. Derartige Verfahren lassen sich in vorteilhafter Weise in einen Bearbeitungsablauf integrieren und von einer entsprechenden Bearbeitungsmaschine ausführen.

In einer Ausführungsform ist es vorgesehen, das Ausbilden von Werkstücken mittels eines Schmelzschichtverfahrens, mittels eines Verfahrens unter Einsatz eines Zweikomponentensystems oder mittels Lichtaushärtung erfolgt. Das Schmelzschichtverfahren ist besonders vielseitig und flexibel einsetzbar. Im Falle eines Zweikomponentensystems kann die Aushärtung des erstellten Werkstücks in vorteilhafter Weise vorgegeben werden. Die Lichtaushärtung hat den Vorteil, dass der Beginn des Aushärtevorgangs durch den Beginn der Bestrahlung bestimmt werden kann.

Gemäß einer Ausführungsform ist es vorgesehen, dass das Bearbeiten zumindest eines der Werkstücke mittels eines subtraktiven Verfahrens nach dem Ausbilden des letzten Werkstücks einer Gruppe von Werkstücken erfolgt. Somit wird gemäß dieser Variante zunächst die Gruppe von Werkstücken mittels des additiven Verfahrens erstellt und nachfolgend eine subtraktive Bearbeitung vorgenommen.

Ferner kann das Verfahren dadurch ausgeprägt sein, dass die Information anhand eines Simulationsmodels des jeweiligen Werkstücks ermittelt wird. Somit lässt sich das Verfahren in vorausschauender Weise einrichten.

Die Information kann in einer Speichereinrichtung als Datensatz gespeichert werden. Diese Möglichkeit kann zu Dokumentationszwecken und/oder zur Steuerung oder Verfeinerung des Verfahrens umgesetzt werden. Dabei kann es vorgesehen sein, dass der Datensatz anhand weiterer werkstückspezifischer Informationen ergänzt oder geändert wird. Somit kann das Verfahren weiter präzisiert werden.

In einer Ausführungsform ist es vorgesehen, dass die Werkstücke eine erste Gruppe von Werkstücken bilden, wobei zumindest eine zweite Gruppe der Werkstücke nach der ersten Gruppe gefertigt wird. Die Gruppen der Werkstücke können dabei unterschiedlich geartete oder unterschiedlich ausgebildete Werkstücke aufweisen. Beispielsweise kann ein bestimmtes Werkstück-Set erstellt werden, das Element einer später zusammenzufügenden Baugruppe bildet.

Als ein Beispiel eines solchen Werkstück-Sets kann eine Kommode angeführt werden, die einen Basiskörper sowie mehrere Schubladen aufweist. Der Basiskörper sowie die Schubladen werden von einem Endkunden zur Kommode zusammengestellt.

Alternativ können Werkstücke einer Gruppe auch gleichartig ausgebildet sein.

In einer weiteren Ausführungsform ist das Verfahren derart weitergebildet, dass die erste Gruppe in einem ersten Bearbeitungsbereich angeordnet ist, wobei die erste Gruppe von einer Werkstückauflage entnommen wird, während die zweite Gruppe gefertigt wird. Somit können Nebenzeiten nochmals verringert und somit die Produktivität gesteigert werden.

Wenn die zuvor genannten Werkstücke Elemente eines Möbelstücks sind, kann die Fertigung eines solchen Möbelstücks in kosteneffektiver Weise ausgeführt werden.

Ferner betrifft die Erfindung ein Verfahren gemäß einem der vorangegangenen Aspekte, wobei eine Bearbeitungsmaschine verwendet wird, die eine additive Bearbeitungsvorrichtung und eine für das subtraktive Verfahren vorgesehene Spindeleinheit aufweist.

Dabei kann es vorgesehen sein, dass die Bearbeitungsvorrichtung und die Spindeleinheit an einem gemeinsamen Schlitten angebracht sind. Eine solche Ausgestaltung kann auch im Zuge des zuvor aufgeführten Verfahrens zum Einsatz kommen.

### Kurze Beschreibung der Zeichnungen

- Fig. 1: zeigt eine Bearbeitungsmaschine, mit der eine Gruppe von Werkstücken gefertigt wurde.

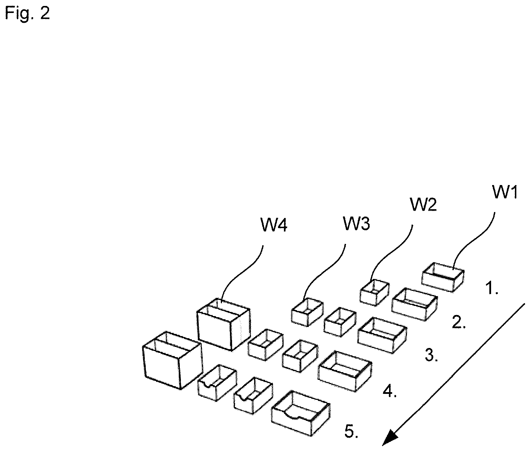

- Fig. 2: veranschaulicht die schrittweise Fertigung der Werkstücke der in Figur 1 dargestellten Gruppe
- Fig. 3: zeigt die in Figur 1 dargestellte Bearbeitungsmaschine mit mehreren Gruppen von Werkstücken
- Fig. 4: zeigt die in Fig. 3 dargestellte Bearbeitungsmaschine während eines Bearbeitungsvorgangs.

### Beschreibung der bevorzugten Ausführungsformen

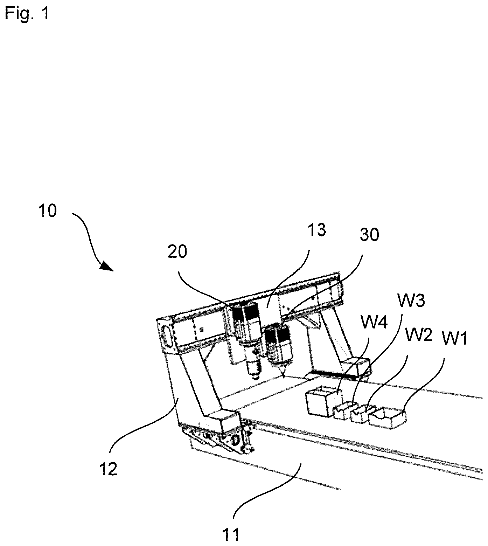

In Fig. 1 wird eine Ausführungsform einer Bearbeitungsmaschine 10 dargestellt, mittels derer ein subtraktives Verfahren zum Erstellen oder Ergänzen von Werkstücken sowie ein subtraktives Verfahren zum Bearbeiten von Werkstücken kombiniert werden können.

Die Bearbeitungsmaschine 10 umfasst ein Maschinenbett 11, entlang dessen ein Portal 12 beweglich ist. Am Portal 12 ist ein Schlitten 13 angebracht, welcher Schlitten 13 eine additive Bearbeitungsvorrichtung 20 sowie eine Spindeleinheit 30 aufnimmt. Die Spindeleinheit 30 kann beispielsweise ein Fräswerkzeug aufnehmen, mit dem im Zuge eines subtraktiven Verfahrens ein Materialabtrag, und somit eine subtraktive Bearbeitung, an einem oder mehreren Werkstücken vorgenommen werden kann.

Obwohl die Bearbeitungseinrichtung 20 sowie die Spindeleinheit 30 an einem gemeinsamen Schlitten 13 angebracht sind, ist es gemäß einer weiteren Ausführungsform möglich, die Bearbeitungseinrichtung 20 sowie die Spindeleinheit 30 jeweils unabhängig voneinander verfahrbar vorzusehen.

Die in Fig. 1 dargestellte Bearbeitungsmaschine 10 wurde eingesetzt, eine Gruppe von Werkstücken W1-W4 herzustellen. Die Werkstücke W1-W4 befinden sich nach Abschluss der Bearbeitung an einer Werkstückauflagefläche. Konkret handelt es sich bei den Werkstücken W1-W3 um Schubladen, wohingegen das Werkstück W4 ein Gehäuse zur Aufnahme der Schubladen darstellt. Die Art, Anzahl und Ausgestaltung der Werkstücke ist jedoch beispielhaft zu verstehen.

Dabei unterscheiden sich die Werkstücke W1-W4 darin, dass das Werkstück W4 rein in einem additiven Verfahren hergestellt wurde, wohingegen die Werkstücke W1-W3 in einem weiteren Bearbeitungsschritt nachbearbeitet wurden, um die in Fig. 1 dargestellten Konturen zu erstellen.

Im Rahmen des Verfahrens werden die Werkstücke jeweils einzeln nacheinander mittels eines additiven Verfahrens hergestellt. Dies bedeutet, dass zunächst das Werkstück W1 additiv gefertigt wird, dann das Werkstück W2, nachfolgend das Werkstück W3 sowie abschließend das Werkstück W4.

Anschließend wird in einem weiteren Verfahrensschritt mittels der Spindeleinheit 30 ein subtraktives Verfahren an den Werkstücken W1-W3 durchgeführt, wobei wiederum die Reihenfolge der Werkstücke W1-W3 eingehalten wird. Dies ist vorliegend zielführend, da das Werkstück W1 nach dessen additiver Herstellung bereits vollständig ausgehärtet ist und somit entsprechend mittels der Spindeleinheit 30 bearbeitet werden kann.

Gemäß einer weiteren Ausführungsform kann es jedoch vorgesehen sein, die Reihenfolge der Bearbeitungsabschnitte des subtraktiven Verfahrens zu ändern, sodass zunächst dasjenige Werkstück bearbeitet wird, das bereits vollständig ausgehärtet ist.

Insbesondere wird ein Werkstück subtraktiv bearbeitet, das auf Grund der Ausgestaltung dieses Werkstücks gegenüber den anderen Werkstücken schneller ausgehärtet ist, beispielsweise auf Grund der Größe oder der Oberfläche des Werkstücks. Die Bearbeitungsreihenfolge kann dabei vorab durch eine entsprechende Berechnung oder während der Bearbeitung durch eine Bewertung der Werkstücke mittels eines Thermosensors, beispielsweise einer Thermokamera, angepasst werden. Auf diese Weise ist es möglich, eine getaktete Herstellung von Gruppen von Werkstücken zu realisieren.

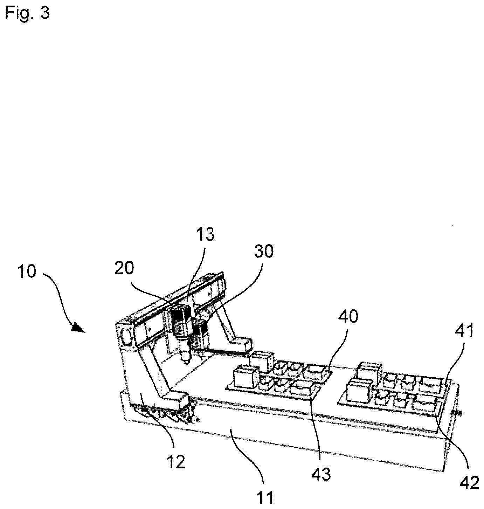

Gemäß einer weiteren Ausgestaltung des Verfahrens werden an der Bearbeitungsmaschine 10 mehrere Bearbeitungsbereiche 40-43 festgelegt (siehe Fig. 3). In jedem der Bearbeitungsbereiche 40-43 wird ein Bauteil oder eine Gruppe von Werkstücken gefertigt. In der Ausführungsform gemäß Fig. 3 werden Werkstücke hergestellt, die in einem ersten Bearbeitungsschritt zunächst alle mittels eines additiven Verfahrens gefertigt werden.

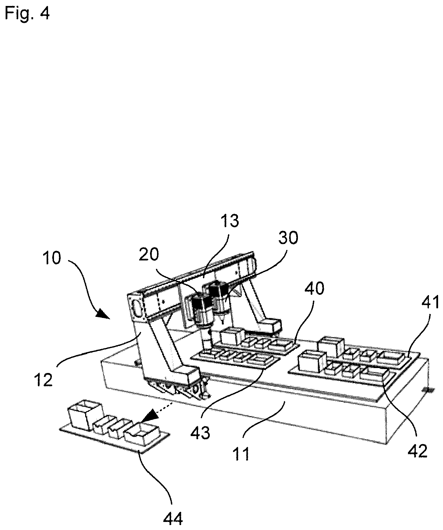

Dabei kann es sein, dass die Aushärtezeit länger dauert, als die additive Fertigung einer Gruppe. In diesem Fall kann die Bearbeitungsmaschine 10 weitere Gruppen von Werkstücken in einem additiven Verfahren herstellen (siehe auch Fig. 4). Sind die ersten Werkstücke vollständig ausgehärtet, so können diese mittels eines subtraktiven Verfahrens bearbeitet und nach der Fertigstellung von der Bearbeitungsmaschine 10 entnommen werden. Die Entnahme der Werkstücke kann beispielsweise manuell oder mittels einer Entnahmevorrichtung durchgeführt werden. In Figur 4 wird dies mit einem Bearbeitungsbereich 44 veranschaulicht, der als entnehmbare Unterlage ausgebildet ist, auf der eine Gruppe von Werkstücken ausgebildet wurde.

Im Rahmen der zuvor beschriebenen Ausführungsform kann der Wechsel zwischen einem additiven Verfahren und einem subtraktiven Verfahren mehrfach stattfinden. Ferner ist es möglich, das Einlegen von einem oder mehreren Teilen, die beispielsweise zur Verstärkung von Werkstücken verwendet werden, in den Gesamtprozess einfließen. Auch kann an einem mittels des additiven Verfahrens erstellten Werkstücks ein weiteres Element angebracht werden.

## Patentansprüche

1. Verfahren zum Bearbeiten von Werkstücken, umfassend die Schritte:
Nacheinander Ausbilden von Werkstücken (W1-W4) mittels eines additiven Verfahrens,
Bearbeiten zumindest eines der Werkstücke (W1-W3) mittels eines subtraktiven Verfahrens,
**dadurch gekennzeichnet, dass**
basierend auf werkstückspezifischen Informationen die Anzahl der nacheinander ausgebildeten Werkstücke vor dem Bearbeiten des zumindest einen Werkstücks (W1-W3) mittels des subtraktiven Verfahrens bestimmt wird, wobei die Information eines Temperatursensors an einem oder mehreren der mittels des additiven Verfahrens ausgebildeten Werkstücke (W1-W4) ermittelt wird,
und/oder
die werkstückspezifische Information vor dem Ausbilden der Werkstücke (W1-W4) durch Bestimmung der jeweiligen Aushärtezeit der Werkstücke mittels Simulation ermittelt wird.

2. Verfahren gemäß Anspruch 1, wobei das subtraktive Verfahren ein spanendes Verfahren, insbesondere mittels eines Fräsers oder Bohrers, umfasst.

3. Verfahren gemäß einem der vorangegangenen Ansprüche, wobei das Ausbilden von Werkstücken mittels eines Schmelzschichtverfahrens, mittels eines Verfahrens unter Einsatz eines Zweikomponentensystems oder mittels Lichtaushärtung oder einer Kombination dieser Verfahren erfolgt.

4. Verfahren gemäß einem der vorangegangenen Ansprüche, wobei das Bearbeiten zumindest eines der Werkstücke (W1-W4) mittels eines subtraktiven Verfahrens nach dem Ausbilden des letzten Werkstücks einer Gruppe von Werkstücken erfolgt.

5. Verfahren gemäß einem der vorangegangenen Ansprüche, wobei die Information in einer Speichereinrichtung als Datensatz gespeichert wird, wobei bevorzugt ist, dass der Datensatz anhand weiterer werkstückspezifischer Informationen ergänzt oder geändert wird.

6. Verfahren gemäß einem der vorangegangenen Ansprüche, wobei die Werkstücke (W1-W4) eine erste Gruppe von Werkstücken bilden, wobei zumindest eine zweite Gruppe der Werkstücke (W1-W4) nach der ersten Gruppe gefertigt wird.

7. Verfahren gemäß einem der vorangegangenen Ansprüche, wobei die erste Gruppe in einem ersten Bearbeitungsbereich (40) angeordnet ist, wobei die erste Gruppe von einer Werkstückauflage entnommen wird, während die zweite Gruppe gefertigt wird.

8. Verfahren gemäß einem der vorangegangenen Ansprüche, wobei die Werkstücke Elemente eines Möbelstücks sind.

9. Verfahren gemäß einem der vorangegangenen Ansprüche, wobei eine Bearbeitungsmaschine (10) verwendet wird, die eine additive Bearbeitungsvorrichtung (20) und eine für das subtraktive Verfahren vorgesehene Spindeleinheit (30) aufweist.

10. Verfahren gemäß Anspruch 9, wobei die Bearbeitungsvorrichtung (20) und die Spindeleinheit (30) an einem gemeinsamen Schlitten (13) angebracht sind.

## Claims

1. Method for machining workpieces, comprising the steps of:
forming workpieces (Wl-W4) one after the other by means of an additive method,
machining at least one of the workpieces (Wl-W3) by means of a subtractive method,
**characterised in that**
the number of workpieces formed one after the other is determined based on workpiece-specific information prior to machining of the at least one workpiece (W1-W3) by means of the subtractive method, wherein
the information of a temperature sensor is determined on one or more of the workpieces (W1-W4) formed by means of the additive method,
and/or
the workpiece-specific information is determined prior to formation of the workpieces (W1-W4) by ascertaining the relevant curing time of the workpieces by means of simulation.

2. Method according to claim 1, wherein the subtractive method comprises a material-removal method, in particular by means of a milling cutter or drill.

3. Method according to any of the preceding claims, wherein workpieces are formed by means of a fused filament fabrication method, by means of a method using a two-component system or by means of photocuring or a combination of these methods.

4. Method according to any of the preceding claims, wherein at least one of the workpieces (W1-W4) is machined by means of a subtractive method after the last workpiece of a group of workpieces has been formed.

5. Method according to any of the preceding claims, wherein the information is saved as a data record in a memory device, wherein it is preferable for the data record to be supplemented or altered using additional workpiece-specific information.

6. Method according to any of the preceding claims, wherein the workpieces (W1-W4) form a first group of workpieces, wherein at least one second group of workpieces (W1-W4) is manufactured after the first group.

7. Method according to any of the preceding claims, wherein the first group is arranged in a first machining region (40), wherein the first group is removed from a workpiece support while the second group is being manufactured.

8. Method according to any of the preceding claims, wherein the workpieces are elements of a piece of furniture.

9. Method according to any of the preceding claims, wherein a machine tool (10) is used which comprises an additive machining apparatus (20) and a spindle unit (30) provided for the subtractive method.

10. Method according to claim 9, wherein the machining apparatus (20) and the spindle unit (30) are mounted on a common slide (13).

## Revendications

1. Procédé d'usinage de pièces à usiner, comprenant les étapes de :
la réalisation les unes après les autres de pièces à usiner (W1-W4) au moyen d'un procédé additif,
l'usinage au moins d'une des pièces à usiner (W1-W3) au moyen d'un procédé soustractif,
**caractérisé en ce que**
sur la base d'informations spécifiques à la pièce, le nombre des pièces à usiner réalisées les unes après les autres est déterminé avant l'usinage de l'au moins une pièce à usiner (W1-W3) au moyen du procédé soustractif, dans lequel l'information d'un capteur de température est calculée au niveau d'une ou plusieurs des pièces à usiner (W1-W4) réalisées au moyen du procédé additif,
et/ou
l'information spécifique à la pièce est déterminée avant la réalisation des pièces à usiner (W1-W4) par détermination du temps de durcissement respectif des pièces à usiner au moyen de la simulation.

2. Procédé selon la revendication 1, dans lequel le procédé soustractif comprend un procédé d'enlèvement de copeaux, en particulier au moyen d'une fraise ou d'un foret.

3. Procédé selon l'une quelconque des revendications précédentes, dans lequel la réalisation de pièces à usiner est effectuée au moyen d'un procédé de couche de matière fondue, au moyen d'un procédé utilisant un système à deux composants ou au moyen du durcissement à la lumière ou d'une combinaison de ces procédés.

4. Procédé selon l'une quelconque des revendications précédentes, dans lequel l'usinage au moins d'une des pièces à usiner (W1-W4) est effectué au moyen d'un procédé soustractif après la réalisation de la dernière pièce à usiner d'un groupe de pièces à usiner.

5. Procédé selon l'une quelconque des revendications précédentes, dans lequel l'information dans un appareil d'enregistrement est enregistrée comme jeu de données, dans lequel il est préféré que le jeu de données soit complété ou modifié au moyen d'autres informations spécifiques à la pièce.

6. Procédé selon l'une quelconque des revendications précédentes, dans lequel les pièces à usiner (W1-W4) forment un premier groupe de pièces à usiner, dans lequel au moins un second groupe des pièces à usiner (W1-W4) est fabriqué après le premier groupe.

7. Procédé selon l'une quelconque des revendications précédentes, dans lequel le premier groupe est agencé dans une première zone d'usinage (40), dans lequel le premier groupe est retiré d'un support de pièce alors que le second groupe est fabriqué.

8. Procédé selon l'une quelconque des revendications précédentes, dans lequel les pièces à usiner sont des éléments d'un meuble.

9. Procédé selon l'une quelconque des revendications précédentes, dans lequel une machine à usiner (10) est utilisée, laquelle présente un dispositif d'usinage (20) additif et une unité de broche (30) prévue pour le procédé soustractif.

10. Procédé selon la revendication 9, dans lequel le dispositif d'usinage (20) et l'unité de broche (30) sont montés au niveau d'un chariot commun (13).
